# EUROPÄISCHE PATENTANMELDUNG

(11) **EP 4 485 235 A1**
(43) Veröffentlichungstag der Anmeldung: **01.01.2025**
(21) Anmeldenummer: 23182410.3
(22) Anmeldetag: 29.06.2023
(51) Int. Cl.: G06F 18/40, G06F 8/35, G06V 10/70, G06V 10/94

(54) **COMPUTER-IMPLEMENTIERTE DATENSTRUKTUR ZUR VERARBEITUNG VON SENSOR-DATEN**

(71) Anmelder: Siemens Aktiengesellschaft, 80333 München (DE)
(72) Erfinder: SCHALL, Daniel, 2020 Hollabrunn (AT); SÜNDERMANN, Axel, 1220 Wien (AT)
(74) Vertreter: Siemens Patent Attorneys

(57) **Zusammenfassung**

Computer-implementierte Datenstruktur (DS) zur Verarbeitung von Sensor-Daten (SD) mit einem Modell (M) auf Basis künstlicher Intelligenz, umfassend
- zumindest einen Pre-Processing-Programmcode (PRE_PR) zur Vorverarbeitung der Sensor-Daten (SD),
- zumindest einen Post-Processing-Programmcode (POST_PR) zur Nachverarbeitung der Sensor-Daten (SD),
- das Modell (M) zur Verarbeitung der Sensor-Daten (SD) mit
∘ zumindest einem Trainings-Programmcode (TR_C) zum Trainieren des Modells (M),
∘ zumindest einem Inferenz-Programmcode (IN_C) zum Anwenden der Sensor-Daten (SD) auf das Modell (M),
∘ zumindest ein Artefakt (ART), welches das Ergebnis des ausgeführten zumindest einem Trainings-Programmcode (TR_C) und/oder zumindest einen Inferenz-Programmcodes (IN_C) beschreibt,

- zumindest eine Geschäfts-Logik-Verknüpfung (BL) betreffend das zumindest eine Artefakt (ART),
- eine Verarbeitungs-Konfiguration (CONF), welche zumindest einen Parameter zur Ausführung von Vorverarbeitung (PRE_PR), Nachverarbeitung (POST_PR) und/oder Verarbeitung der Daten (TR_C, IN_C) aufweist,
- eine Abhängigkeits-Konfiguration (SW_PKG), welche zumindest eine Information zur Abhängigkeit von Programmcode-Modulen und Programmcode-Bibliotheken aufweist.

## Beschreibung

*Unabhängig vom grammatikalischen Geschlecht eines bestimmten Begriffes sind Personen mit männlicher, weiblicher oder anderer Geschlechteridentität mit umfasst.*

Die Erfindung betrifft eine computer-implementierte Daten-struktur zur Verarbeitung von Sensor-Daten mit einem Modell auf Basis künstlicher Intelligenz.

Die Erfindung betrifft ferner ein computer-implementiertes Verfahren und ein System zum Betrieb eines technischen Geräts mit einem Modell auf Basis künstlicher Intelligenz.

Die Erfindung betrifft auch ein Computer-Programm-Produkt.

Für immer mehr industrielle Kunden wird es zu einer Herausforderung, einzelne Anwendungsfälle individuell zu entwickeln, da ein Fachkräftemangel herrscht und die Entwicklungskaufwände zu groß sind.

In Produktionsanlagen wird häufig eine visuelle Qualitätskontrolle benötigt, welche sich theoretisch sehr gut automatisieren lässt.

Jedoch wird dabei ein enormer Aufwand an individueller Justierung der Algorithmen benötigt, denn beispielsweise erfordern unterschiedliche Lichtverhältnisse, Platzierung von Maschine, Alter und Betriebsstunden der Maschinen ein hohes Maß an Anpassung, was die Vorhersagequalität einzelner KI-Modelle ungünstig beeinflussen kann.

Derartige Justierungen erfolgen im Stand der Technik manuell oder es wird eine Lösung individuell entwickelt.

Lösungen mit künstlicher Intelligenz (kurz "KI") auf Basis von maschinellem Lernen (kurz "ML") werden im Stand der Technik manuell angepasst beziehungsweise parametriert. Derartige Anpassungen sind auch für eingesetzte KI-Algorithmen notwendig.

Es ist Aufgabe der Erfindung eine Anwendung eines KI-Modells zu vereinfachen und es auch unfachmännischem Personal zu erlauben, KI-Anwendungen auf einfache Weise zusammenzustellen, mit Sensor-Daten auszuführen, und auch ein technisches Gerät zu betreiben.

Die erfindungsgemäße Aufgabe wird durch eine computer-implementierte Datenstruktur zur Verarbeitung von Sensor-Daten mit einem Modell auf Basis künstlicher Intelligenz gelöst, umfassend
- zumindest einen Pre-Processing-Programmcode zur Vorverarbeitung der Sensor-Daten,
- zumindest einen Post-Processing-Programmcode zur Nachverarbeitung der Sensor-Daten,
- das Modell zur Verarbeitung der Sensor-Daten mit
   o zumindest einem Trainings-Programmcode zum Trainieren des Modells,
   o zumindest einem Inferenz-Programmcode zum Anwenden der Sensor-Daten auf das Modell,
   o zumindest ein Artefakt, welches das Ergebnis des ausgeführten zumindest einem Trainings-Programmcode und/oder zumindest einen Inferenz-Programmcodes beschreibt,
- zumindest eine Geschäfts-Logik-Verknüpfung betreffend das zumindest eine Artefakt,
- eine Verarbeitungs-Konfiguration, welche zumindest einen Parameter zur Ausführung von Vorverarbeitung, Nachverarbeitung und/oder Verarbeitung der Daten aufweist,
- eine Abhängigkeits-Konfiguration, welche zumindest eine Information zur Abhängigkeit von Programmcode-Modulen und Programmcode-Bibliotheken aufweist.

Dadurch wird erreicht, dass die Anwendung von AI-Modellen sehr einfach durchführbar ist, seht leicht skalierbar ist, und die Anwendung von AI-Lösungen insgesamt erleichtert wird, da kein spezielles Fachwissen aus ML oder der Statistik benötigt wird.

Die Bildung einer entsprechenden Datenstruktur als "Lösungs-Paket" bietet den entscheidenden Vorteil, dass "baukastenartig" ein Software-Bündel geschnürt werden kann, welches dann auf einfache Weise durch eine entsprechende Rechenvorrichtung verarbeitet werden kann.

Ein Trainings-Programmcode zum Trainieren des Modells dient dazu, ein Modell mit einem Datensatz zu trainieren, also beispielswiese Datensätze mit als "gut" und "schlecht" gekennzeichneten Daten dazu zu verwenden, um ein genaues und realistisches Modell zu erzeugen.

Ein Inferenz-Programmcode zum Anwenden der Sensor-Daten auf das Modell dient dazu, das zuvor trainierte Modell anzuwenden und beispielsweise eine Prädiktion des Betriebsverhaltens eines technischen Geräts anhand eines aktuellen Datensatzes durchzuführen.

Ein Artefakt ist ein Begriff für maschinelles Lernen, der zur Beschreibung der durch den Trainingsprozess erzeugten Ausgabe verwendet wird. Die Ausgabe kann ein vollständig trainiertes Modell, ein Modellprüfpunkt oder eine während des Trainingsprozesses erstellte Datei sein.

KI-Artefakte beschreiben alle digitalen Produkte, die in einem KI-Tool verwendet werden. Sie können die Eingabe, die Ausgabe oder ein Zwischenergebnis sein, das von Tools verarbeitet wird.

Es können im Wesentlichen sechs Arten von Artefakten spezifiziert werden, welche den Schritten in einer Pipeline entsprechen: Daten, Wissen, Modell, Anwendung, Algorithmus und Benchmark.

Die erfindungsgemäße Aufgabe wird durch ein computer-implementiertes Verfahren zum Betrieb eines technischen Geräts mit einem Modell auf Basis künstlicher Intelligenz gelöst, wobei folgende Schritte ausgeführt werden:
a) Erfassen von Sensor-Daten durch ein Erfassungsmittel und Bereitstellen an eine Rechenvorrichtung,
b) Bereitstellen von Anwendungs-Daten an die Rechenvorrichtung, umfassend
   - zumindest einem Pre-Processing-Programmcode zur Vorverarbeitung der Sensor-Daten,
   - zumindest einem Post-Processing-Programmcodes zur Nachverarbeitung der Sensor-Daten,
   - zumindest einem Modell, umfassend
      ∘ zumindest einen Trainings-Programmcode,
      ∘ zumindest einen Inferenz-Programmcode,
      ∘ zumindest ein Artefakt, welches das Ergebnis des ausgeführten zumindest einem Trainings-Programmcode und/oder zumindest einen Inferenz-Programmcodes beschreibt,
   - zumindest einer Geschäfts-Logik-Verknüpfung, welche aus dem zumindest einen Artefakt eine Operation für den Betrieb des technischen Geräts erzeugt,
   - eine Verarbeitungs-Konfiguration,
   - eine Abhängigkeits-Konfiguration,
c) Erstellen einer Datenstruktur nach dem vorhergehenden Anspruch mit den Sensor-Daten aus Schritt a) und den Anwendungs-Daten aus Schritt b) als Anwendungs-Paket (SP), durch die Rechenvorrichtung,
d) Ausführen des Anwendungs-Pakets durch die Rechenvorrichtung,
e) Erzeugen eines Betriebs-Datensatzes zur Steuerung des technischen Geräts aus dem Anwendungs-Paket, durch die Rechenvorrichtung,
f) Betreiben des technischen Geräts mit dem Betriebs-Datensatz durch die Rechenvorrichtung.

Durch das Verfahren kann erreicht werden, dass die genannte Datenstruktur angewandt wird, um ein technisches Gerät auf einfache Weise und ohne spezifisches ML-/KI-Fachwissen zu Steuern und zu Betreiben.

In einer Weiterbildung der Erfindung ist es vorgesehen, dass beim Bereitstellen im Schritt b) die jeweiligen Elemente aus vordefinierten Listen ausgewählt werden.

Dadurch kann beispielsweise ein Modell und/oder ein Programmcode im Sinne eines föderierten Lernens von einem Server an mehrere Klienten bereitgestellt wird.

Föderales Lernen beschreibt eine Technik im Bereich des maschinellen Lernens, bei der ein Modell auf mehreren Geräten trainiert wird.

Jedes teilnehmende Gerät verfügt über einen eigenen lokalen Datensatz, der nicht mit anderen Teilnehmern ausgetauscht wird.

Es ist dabei jedoch vorteilhaft, wenn ein generisches zentrales Modell von einem Server an Klienten bereitgestellt werden, und die Klienten jeweils ein individuelles, lokales Modell weiterentwickeln.

Im Gegensatz zum föderierten Lernen gibt es beim herkömmlichen maschinellen Lernen einen zentralen Datensatz.

Durch das föderierte Lernen können mehrere Klienten ein gemeinsames robustes Modell unter Berücksichtigung kritischer Probleme wie Datenschutz, Datensicherheit, Zugriffsrechte und Zugang zu heterogenen Daten aufbauen und zentral verwalten. In einer Weiterbildung der Erfindung ist es vorgesehen, wobei das zumindest eine Modell ferner einen Filter-Programmcode umfasst, vorzugsweise einen Rauschentfernungs-Filter-Programmcode, welcher auf einem Auto-Encoder aufbaut.

Dadurch kann auf einfache Weise eine Filterung realisiert werden, wie beispielsweise von Rauschen in einem digitalen Bild.

Die erfindungsgemäße Aufgabe wird durch ein System zum Betrieb eines technischen Geräts mit einem Modell auf Basis künstlicher Intelligenz gelöst, umfassend eine Rechenvorrichtung mit einem verbundenen Erfassungsmittel für Sensor-Daten, wobei die Rechenvorrichtung dazu eingerichtet ist, das erfindungsgemäße Verfahren auszuführen.

In einer Weiterbildung der Erfindung ist ein System vorgesehen, umfassend einen Server mit einem ersten Prozessor und einem ersten Speicher und zumindest einen Klienten mit jeweils einem zweiten Prozessor und einem zweiten Speicher, wobei der zumindest eine Klient dazu eingerichtet ist, Schritt a) auszuführen, und der Server dazu eingerichtet ist, Schritt b) auszuführen.

Dadurch kann erreicht werden, dass der Server Module und/oder Programmcodes im Sinne einer zentralen Bibliothek den Klienten bereitstellen.

In einer Weiterbildung der Erfindung ist ein System vorgesehen, umfassend einen ersten Klienten und zumindest einen zweiten Klienten, wobei der erste Klient dazu eingerichtet ist, Schritt a) auszuführen, und der zumindest eine zweite Klient dazu eingerichtet ist, Schritt d) auszuführen.

Dadurch kann erreicht werden, dass Klienten mit unterschiedlichen Ressourcen hinsichtlich Rechenleistung oder Speicher gezielt ausgewählt werden können, um Verfahrensanteile gemäß einer optimalen Ressourcenauslastung verteilt auszuführen. Die erfindungsgemäße Aufgabe wird durch ein computer-Programm-Produkt mit darin gespeicherten maschinenlesbaren Anweisungen gelöst, die, wenn sie von einer Verarbeitungseinheit ausgeführt werden, diese veranlassen, das Verfahren nach einem der vorhergehenden Ansprüche auszuführen.

Die Erfindung wird nachfolgend anhand eines in den beigeschlossenen Zeichnungen dargestellten Ausführungsbeispiels näher erläutert. In den Zeichnungen zeigt:
- Fig. 1: ein Beispiel für eine Klienten-Server-Systemarchitektur,
- Fig. 2: ein allgemeines Beispiel für ein "AI solution pack-age"- Konzept,
- Fig. 3: ein Beispiel für eine Produktion von Gebäck,
- Fig. 4: ein Beispiel für "gutes" Gebäck,
- Fig. 5: ein Beispiel für "defektes" Gebäck,
- Fig. 6: ein Beispiel für ein "AI solution package",
- Fig. 7: ein Beispiel für eine Verarbeitung durch einen Au-to-Encoder,
- Fig. 8: ein Ausführungsbeispiel für das erfindungsgemäße Verfahren.

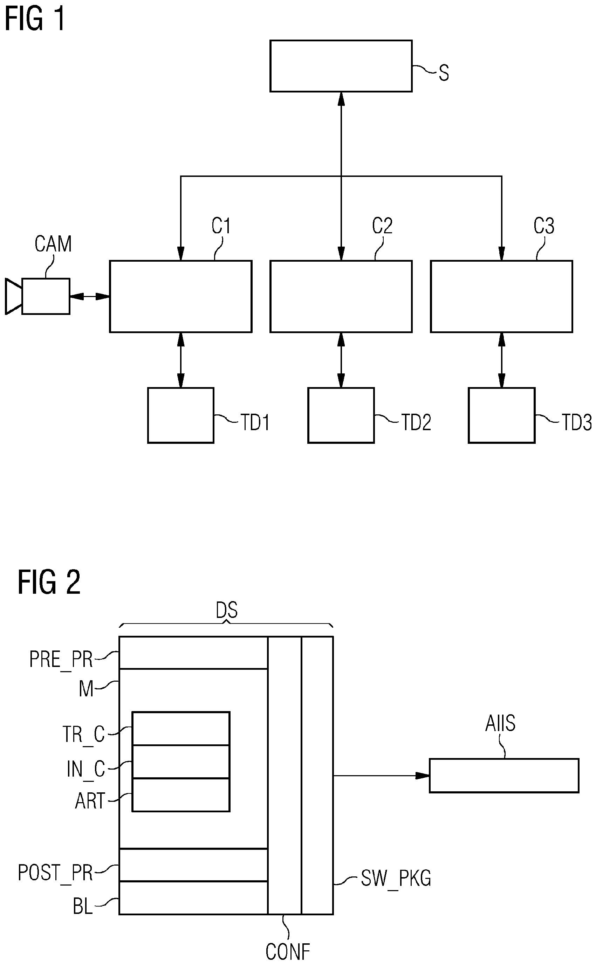

**Fig. 1** zeigt ein Beispiel für eine Klienten-Server-Systemarchitektur mit einem Server S und drei verbundenen Klienten C1-C3, welche jeweils Rechenvorrichtungen mit jeweils einem Prozessor und jeweils einem Speicher aufweisen, wobei die Klienten C1-C3 jeweils mit einem technischen Gerät TD1-TD3 verbunden sind.

**Fig. 2** zeigt das allgemeine Konzept eines "AI solution package" anhand eines Beispiels für ein solches Lösungs-Paket SP (engl. "solution package").

Ein "AI solution package" erlaubt eine Integration von AI-Modellen beispielsweise für eine Produktionsanwendung, ohne dass AI-/ML-Expertenwissen benötigt wird.

Ein "AI solution package" ist einfach anwendbar, denn das Solution Package bietet eine einfache und intuitive Nutzer-Schnittstelle, um ein AI-Modell in eine Produktionsumgebung zu integrieren.

Über die Nutzer-Schnittstelle können vordefinierte AI-Modelle einfach ausgewählt werden, beispielsweise aus Modellen, welche bereits auf spezielle Anwendungsfälle zugeschnitten und trainiert sind, wie Objekt-Erkennung oder Bild-Segmentierung.

Ferner kann ein Anwender oder Benutzer des Systems auf einfache Weise Daten hoch oder herunterladen, wie Bildaufnahmen eines Kamera-Systems und diese Daten mit einem "visual qualilty engineering system" (kurz VQE) bearbeiten.

Das VQE-System kann das AI-Modell M mit den Daten automatisch trainieren und beispielsweise Parameter-Optimierungen durchführen, ohne dass der Nutzer dabei einschlägiges Fachwissen benötigt, wie in den Gebieten von ML oder Statistik.

Das VQE-System kann das AI-Modell M mit den Daten auch automatisch validieren, um dem Nutzer eine Rückmeldung über die durchgeführten Operationen zu geben.

Ein "AI solution package" erlaubt ferner eine Integration des geneierten AI-Modells in eine Produktions-Umgebung, sowie ein unterschiedliche Verteilungs-Moden (engl. "deployment modes"), wie eine Cloud oder eine Vorort-Lösung.

Ein "AI solution package" erlaubt außerdem eine Beobachtung des AI-Modells, indem beispielsweise Metriken oder Modell-Zustände an den Nutzer bereitgestellt werden.

Ein Anwendungsfall (engl. "use case") umfasst Software-Pakete, Pre-Processing-Programmcode PRE_PR und Post-Processing-Programmcode POST_PR.

Ferner weist der Anwendungsfall einen Programmcode für ein Modell M auf, welcher einen Trainings-Code TR_C, einen Inferenz-Code IN_C und zumindest ein Artefakt ART beinhaltet.

Außerdem ist im Anwendungsfall eine Geschäfts-Logik BL (engl. "business logic") enthalten.

Eine Konfiguration CONF beschreibt die Verbindungen der zuvor genannten Pakete und Codes, aus welchen ein Software-Packet SW_PKG gebildet werden kann, welches wiederum an einen AI-Inferenz-Server AIIS bereitgestellt und dort weiterverarbeitet werden kann.

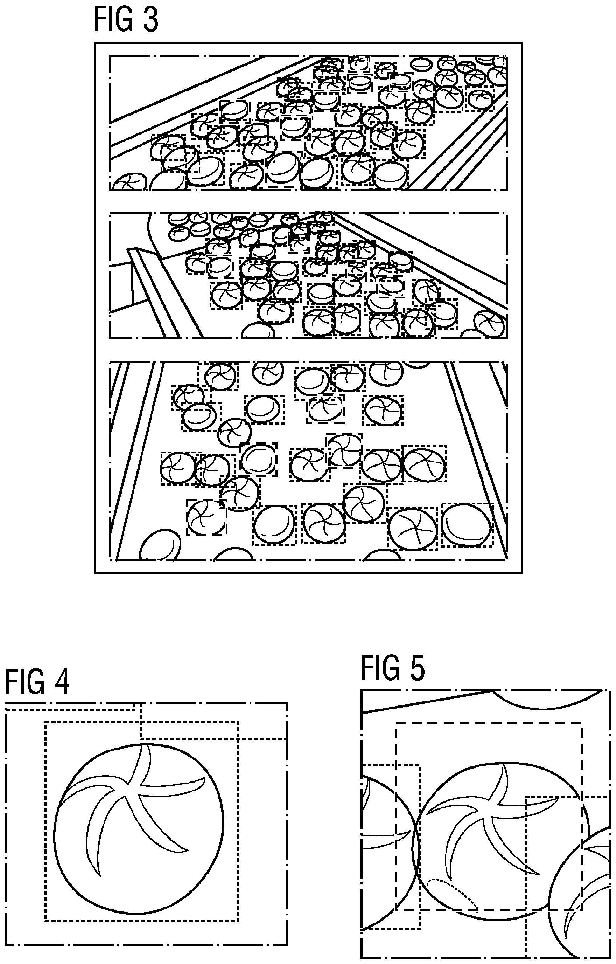

In **Fig. 3** ist ein Beispiel für eine Produktion von Gebäck gezeigt.

Drei unterschiedliche Bilder von jeweiligen Kamera-Sensoren zeigen Gebäck auf einem Förderband aus verschiedenen Blickwinkeln in einer Übersicht.

Ein Gebäck kann beispielsweise "defekt" sein, entspricht also nicht vorbestimmten Qualitätsparametern, und soll automatisch aussortiert werden.

**Fig. 4** stellt ein Beispiel für ein Gebäck dar, welches in der Form Ordnung ist und von anderen Gebäckstücken ausreichend örtlich separiert ist.

**Fig. 5** zeigt ein Beispiel für ein Gebäck dar, welches als defekt gilt, denn sie Separierung zu anderen benachbarten Gebäckstücken ist unzureichend.

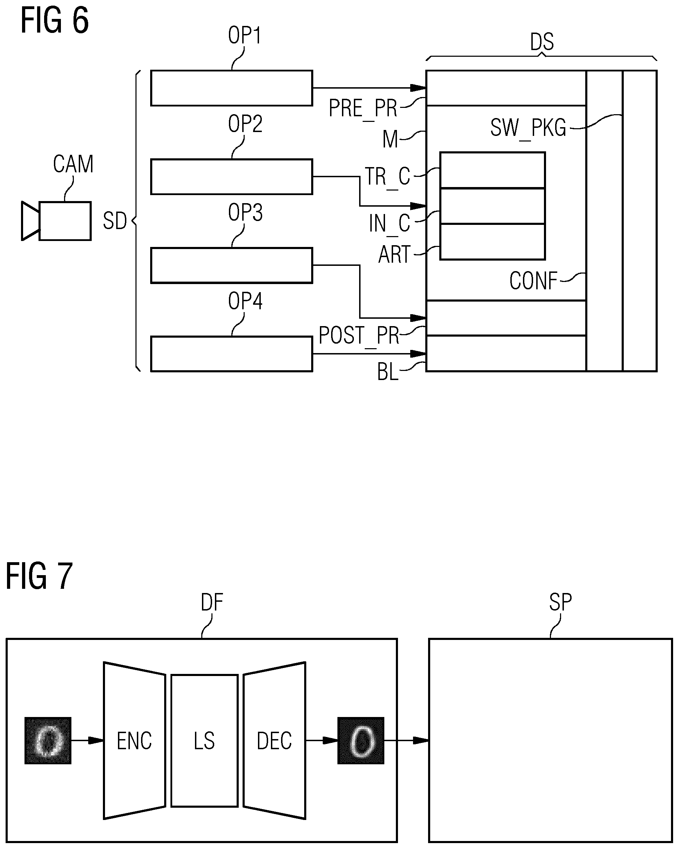

**Fig. 6** zeigt ein Beispiel für ein "AI solution package" mit Eingangs-Operationen, welche auf Sensor-Bilddaten angewendet werden.

Operation OP1 kann beispielsweise einen Bild-Beschnitt und eine Skalierung der Bildgröße umfassen und wird durch das Pre-Processing PRE_PR ausgeführt.

Operation OP2 kann beispielsweise eine Erkennung von guten sowie defekten Gebäckstücken sein und wird durch das Modell M und deren Verarbeitung ausgeführt.

Operation OP3 kann beispielsweise eine Blickwinkel-Anpassung aufweisen und wird durch das Post-Processing POST_PR ausgeführt.

Operation OP4 kann beispielsweise Koordinaten für einen Greifarm eines Transport-Roboters berechnen und wird durch Die Geschäfts-Logik BL ausgeführt.

Insgesamt kann also ein Solution Package helfen die Entwicklungszeit von AI-Modellen und deren Anwendung, wie in einer Produktion, zu verbessern.

**Fig. 7** zeigt ein Beispiel für eine verbesserte Verarbeitung eines AI-Modells M durch einen Auto-Encoder, welcher einen Encoder ENC, einen latenten Raum LS und eine Decoder DEC umfasst.

Der Auto-Encoder erlaubt es auf effiziente Weise eine Darstellung von Daten erlernen, wie eine Reduktion von Dimensionen oder Merkmals-Extraktion.

Der Auto-Encoder weist eine Eingangs-Lage (engl. "input layer") auf, welche Eingangs-Daten einem Netzwerk bereitstellt.

Ferner beinhaltet der Auto-Encoder eine verborgene Lage (engl. "hidden layer") mit dem Encoder ENC und dem Decoder DEC, um die Eingangs-Daten durch Anwendung von Gewichten, Bias und Aktivierungs-Funktionen zu verarbeiten.

Der Auto-Encoder weist auch eine Ausgangs-Lage (engl. "output layer") auf, welche mit den Eingangs-Neuronen übereinstimmt. Der Auto-Encoder ist durch einen Rauschentfernungs-Filter-Programmcode implementiert, welcher einen Rauschentfernungs-Filter DF (engl. "denoising filter") bildet, wobei die entrauschten Bilder dem Solution Package SP bereitgestellt werden.

Der Rauschentfernungs-Filter-Programmcode kann optional vom Modell M umfasst sein.

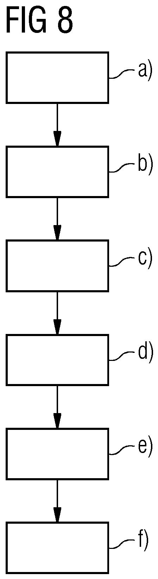

**Fig. 8** zeigt ein Ausführungsbeispiel für das erfindungsgemäße Verfahren, welches auf dem System nach der Fig. 1 ausgeführt wird, und die Datenstruktur DS nach der Fig. 2 berücksichtigt.

Folgende Schritte werden dabei ausgeführt:
a) Erfassen von Sensor-Daten SD in Form von Bilddaten durch ein Erfassungsmittel in Form einer Inspektions-Kamera CAM und Bereitstellen an eine Rechenvorrichtung, gebildet durch den Klienten C1,
b) Bereitstellen von Anwendungs-Daten an die Rechenvorrichtung C1, umfassend
   - Pre-Processing-Programmcodes PRE_PR zur Vorverarbeitung der Sensor-Daten SD,
   - Post-Processing-Programmcodes POST_PR zur Nachverarbeitung der Sensor-Daten SD,
   - ein Modell M, umfassend
      o Trainings-Programmcodes TR_C,
      o Inferenz-Programmcodes IN_C,
      o Artefakte ART, welche das Ergebnis der ausgeführten Trainings-Programmcodes TR_C und/oder Inferenz-Programmcodes IN_C beschreibt,
   - Geschäfts-Logik-Verknüpfungen BL, welche aus den Artefakten ART Operationen für den Betrieb des technischen Geräts TD1 erzeugt,
   - eine Verarbeitungs-Konfiguration CONF,
   - eine Abhängigkeits-Konfiguration SW_PKG.
c) Erstellen einer Datenstruktur DS nach den vorhergehenden Erläuterungen mit den Sensor-Daten SD aus Schritt a) und den Anwendungs-Daten aus Schritt b) als Anwendungs-Paket SP, durch die Rechenvorrichtung C1-C3,
d) Ausführen des Anwendungs-Pakets SP durch die Rechenvorrichtung C1,
e) Erzeugen eines Betriebs-Datensatzes zur Steuerung des technischen Geräts TD1 aus dem Anwendungs-Paket SP, durch die Rechenvorrichtung C1,
f) Betreiben des technischen Geräts TD1 mit dem Betriebs-Datensatz durch die Rechenvorrichtung C1.

Beim Bereitstellen im Schritt b) können die jeweiligen Elemente aus vordefinierten Listen ausgewählt werden, welche vom Server S bereitgestellt werden.

Im Schritt e) und f) erfolgt eine Anwendung des Modells M auf das Gerät TD1, beispielsweise durch ein Berechnen von Prädiktionsdaten, aus welchen der Betriebs-Datensatz bestimmt wird.

Optional kann das Modell M ferner einen Rauschentfernungs-Filter-Programmcode umfassen, welcher auf einem Auto-Encoder aufbaut.

Das Verfahren kann auf dem System nach Fig. 1 ausgeführt werden, welches eine Rechenvorrichtung C1 mit einem verbundenen Erfassungsmittel CAM für die Sensor-Daten SD umfasst.

Das System nach Fig. 1 umfasst einen Server S mit einem ersten Prozessor und einem ersten Speicher und drei Klienten C1-C3 mit jeweils einem zweiten Prozessor und einem zweiten Speicher.

Dabei kann ein Klient C1 dazu eingerichtet sein, Schritt a) auszuführen, und der Server S dazu eingerichtet sein, Schritt b) auszuführen.

Das System nach Fig. 1 umfasst einen ersten Klienten C1 und weitere zweite Klienten C2, C3.

Dabei kann der erste Klient C1 dazu eingerichtet sein, Schritt a) auszuführen, und ein zweiter Klient C2, C3 Schritt d) auszuführen.

### Bezugszeichenliste:

- AIIS: AI Inferenz-Server
- ART: Artefakt
- BL: Geschäfts-Logik (engl. "business logic")
- C1-C3: Klient
- CAM: Sensor, Kamera
- CONF: Konfiguration
- DEC: Decoder
- DF: Rauschentfernungs-Filter
- DS: Daten-Struktur
- ENC: Encoder
- IN_C: Inferenz-Code
- LS: latenter Raum
- M: Modell
- OP1-OP4: Operationen
- POST_PR: Post-Processing
- PRE_PR: Pre-Processing
- S: Server
- SD: Sensor-Daten
- SP: Lösungs-Packet (engl. "solution package")
- SW_PKG: Software-Packet
- TD1-TD3: technisches Gerät
- TR_C: Trainings-Code

## Patentansprüche

1. Computer-implementierte Datenstruktur (DS) zur Verarbeitung von Sensor-Daten (SD) mit einem Modell (M) auf Basis künstlicher Intelligenz, umfassend
- zumindest einen Pre-Processing-Programmcode (PRE_PR) zur Vorverarbeitung der Sensor-Daten (SD),
- zumindest einen Post-Processing-Programmcode (POST_PR) zur Nachverarbeitung der Sensor-Daten (SD),
- das Modell (M) zur Verarbeitung der Sensor-Daten (SD) mit
∘ zumindest einem Trainings-Programmcode (TR_C) zum Trainieren des Modells (M),
∘ zumindest einem Inferenz-Programmcode (IN_C) zum Anwenden der Sensor-Daten (SD) auf das Modell (M),
∘ zumindest ein Artefakt (ART), welches das Ergebnis des ausgeführten zumindest einem Trainings-Programmcode (TR_C) und/oder zumindest einen Inferenz-Programmcodes (IN_C) beschreibt,
- zumindest eine Geschäfts-Logik-Verknüpfung (BL) betreffend das zumindest eine Artefakt (ART),
- eine Verarbeitungs-Konfiguration (CONF), welche zumindest einen Parameter zur Ausführung von Vorverarbeitung (PRE_PR), Nachverarbeitung (POST_PR) und/oder Verarbeitung der Daten (TR_C, IN_C) aufweist,
- eine Abhängigkeits-Konfiguration (SW_PKG), welche zumindest eine Information zur Abhängigkeit von Programmcode-Modulen und Programmcode-Bibliotheken aufweist.

2. Computer-implementiertes Verfahren zum Betrieb eines technischen Geräts (TD1-TD3) mit einem Modell (M) auf Basis künstlicher Intelligenz, wobei folgende Schritte ausgeführt werden:
a) Erfassen von Sensor-Daten (SD) durch ein Erfassungsmittel (CAM) und Bereitstellen an eine Rechenvorrichtung (C1-C3),
b) Bereitstellen von Anwendungs-Daten an die Rechenvorrichtung (C1-C3), umfassend
- zumindest einem Pre-Processing-Programmcode (PRE_PR) zur Vorverarbeitung der Sensor-Daten (SD),
- zumindest einem Post-Processing-Programmcodes (POST_PR) zur Nachverarbeitung der Sensor-Daten (SD),
- zumindest einem Modell (M), umfassend
o zumindest einen Trainings-Programmcode (TR_C),
o zumindest einen Inferenz-Programmcode (IN_C),
o zumindest ein Artefakt (ART), welches das Ergebnis des ausgeführten zumindest einem Trainings-Programmcode (TR_C) und/oder zumindest einen Inferenz-Programmcodes (IN_C) beschreibt,
- zumindest einer Geschäfts-Logik-Verknüpfung (BL), welche aus dem zumindest einen Artefakt (ART) eine Operation für den Betrieb des technischen Geräts erzeugt,
- eine Verarbeitungs-Konfiguration (CONF),
- eine Abhängigkeits-Konfiguration (SW_PKG).
c) Erstellen einer Datenstruktur (DS) nach dem vorhergehenden Anspruch mit den Sensor-Daten (SD) aus Schritt a) und den Anwendungs-Daten aus Schritt b) als Anwendungs-Paket (SP), durch die Rechenvorrichtung (C1-C3),
d) Ausführen des Anwendungs-Pakets (SP) durch die Rechenvorrichtung (C1-C3),
e) Erzeugen eines Betriebs-Datensatzes zur Steuerung des technischen Geräts (TD1-TD3) aus dem Anwendungs-Paket (SP), durch die Rechenvorrichtung (C1-C3),
f) Betreiben des technischen Geräts (TD1-TD3) mit dem Betriebs-Datensatz durch die Rechenvorrichtung (C1-C3).

3. Verfahren nach dem vorhergehenden Anspruch, wobei beim Bereitstellen im Schritt b) die jeweiligen Elemente aus vordefinierten Listen ausgewählt werden.

4. Verfahren nach einem der vorhergehenden Ansprüche, wobei das zumindest eine Modell (M) ferner einen Filter-Programmcode umfasst, vorzugsweise einen Rauschentfernungs-Filter-Programmcode, welcher auf einem Auto-Encoder aufbaut.

5. System zum Betrieb eines technischen Geräts mit einem Modell (M) auf Basis künstlicher Intelligenz, umfassend eine Rechenvorrichtung (C1-C3) mit einem verbundenen Erfassungsmittel (CAM) für Sensor-Daten (SD), wobei die Rechenvorrichtung (C1-C3) dazu eingerichtet ist, das Verfahren nach einem der vorhergehenden Ansprüche auszuführen.

6. System nach dem vorhergehenden Anspruch, umfassend einen Server (S) mit einem ersten Prozessor und einem ersten Speicher und zumindest einen Klienten (C1-C3) mit jeweils einem zweiten Prozessor und einem zweiten Speicher, wobei der zumindest eine Klient (C1-C3) dazu eingerichtet ist, Schritt a) auszuführen, und der Server (S) dazu eingerichtet ist, Schritt b) auszuführen.

7. System nach dem vorhergehenden Anspruch, umfassend einen ersten Klienten (C1) und zumindest einen zweiten Klienten (C2, C3), wobei der erste Klient (C1) dazu eingerichtet ist, Schritt a) auszuführen, und der zumindest eine zweite Klient (C2, C3) dazu eingerichtet ist, Schritt d) auszuführen.

8. Computer-Programm-Produkt mit darin gespeicherten maschinenlesbaren Anweisungen, die, wenn sie von einer Verarbeitungseinheit ausgeführt werden, diese veranlassen, das Verfahren nach einem der vorhergehenden Ansprüche auszuführen.
